# EUROPÄISCHE PATENTSCHRIFT

(11) **EP 1 873 478 B1**
(45) Veröffentlichungstag und Bekanntmachung des Hinweises auf die Patenterteilung: **29.12.2010**
(21) Anmeldenummer: 07109385.0
(22) Anmeldetag: 01.06.2007
(51) Int. Cl.: G01B 7/00, G01D 5/14, F16C 41/00, F16C 29/00

(54) **Führungsschiene für ein Linearwälzlager**
Guide rail for a linear rolling contact bearing
Rail de guidage pour un palier à roulement linéaire

(30) Priorität: 27.06.2006 DE 102006029384
(43) Veröffentlichungstag der Anmeldung: 02.01.2008
(73) Patentinhaber: Schaeffler Technologies GmbH & Co. KG, 91074 Herzogenaurach (DE)
(72) Erfinder: Schindler, Reiner, 66894 Krähenberg (DE)

(56) Entgegenhaltungen:
- EP-A- 0 577 995
- DE-A1- 4 306 951
- DE-A1- 4 313 074
- DE-A1- 10 064 734
- DE-A1- 10 243 021
- DE-A1- 19 922 363
- US-A- 4 184 719

## Beschreibung

Die vorliegende Erfindung betrifft eine Führungsschiene für ein Linearwälzlager. Bei derartigen Linearwälzlagern kann beispielsweise ein Führungswagen an der Führungsschiene über Laufrollen oder andere Wälzkörper längsverschieblich gelagert sein.

Aus DE 102 43 021 A1 beispielsweise ist eine Führungsschiene eines Linearwälzlagers bekannt geworden, deren Schienenkörper mit Laufbahnen für Wälzkörper und mit einer quer zur Längsrichtung des Schienenkörpers geöffneten Längsnut versehen ist. Der Nutgrund dieser Längsnut ist vorzugsweise mit Durchgangsöffnungen zur Durchführung von Schrauben versehen. Ferner ist die Längsnut durch eine Abdeckung abgedeckt, wobei innerhalb der von der Abdeckung abgedeckten Längsnut eine sich längs erstreckende Maßverkörperung als Teil einer Längenmesseinrichtung angeordnet ist. Die Abdeckung ist zerstörungsfrei lösbar an dem Schienenkörper befestigt.

Das Herstellen einer derartigen Führungsschiene ist aufwendig, da in mehreren Arbeitsschritten zunächst der Schienenkörper hergestellt werden muss, anschließend die Maßverkörperung in die Nut eingelegt wird und schließlich die Abdeckung angebracht wird.

Eine Führungsschiene für ein Linearwälzlager mit den Merkmalen des Oberbegriffs des Anspruchs 1 ist aus der DE 43 13 074 A bzw. der DE 43 06 951 A bekannt.

Im letzteren Dokument bildet eine Aufwölbung an der Oberseite der Schiene einen sich in der Längsrichtung erstreckenden Längskanal. In diesem Längskanal ist ein Meßfühler aufgenommen.

Aufgabe der vorliegenden Erfindung ist es, eine Führungsschiene für ein Linearwälzlager nach den Merkmalen des Oberbegriffs des Anspruchs 1 anzugeben, die einfach hergestellt werden kann

Erfindungsgemäß wird diese Aufgabe durch eine Führungschiene gemäß Anspruch 1 gelöst. Die Aufnahme ist umfangsseitig von einer einstückig ausgeführten Wandung des Schienenkörpers umschlossen. Dadurch entfällt ein Arbeitsschritt vollständig, nämlich das Herstellen und Montieren der separat ausgeführten Abdeckung. Und die Schienenoberseite ist ohne weitere Maßnahmen hermetisch abgeschlossen. Die in diese Aufnahme eingeführte Maßverkörperung kann von einer Stirnseite der Führungsschiene her in diese Aufnahme eingeschoben werden. Der Schienenkörper weist eine Wand mit einer äußeren und mit einer inneren Wandung auf. Die äußere Wandung ist an der Schienenoberseite gelegen und die innere Wandung ist Teil der oben beschriebenen Wandung. Die Aufnahme kann demzufolge nahe der Schienenoberseite gelegen sein. Eine dünnwandig ausgeführte Wand ermöglicht problemlos ein Abtasten der in der Aufnahme angeordneten Maßverkörperung mit einem Messkopf, der vorzugsweise an einem Führungswagen angeordnet ist, der an der Führungsschiene längsverschieblich gelagert ist.

Erfindungsgemäß wird nach Einsetzen der Maßverkörperung in die Aufnahme die Wand über ein Druckwerkzeug derart mit Druck beaufschlagt und bleibend verformt , dass die Maßverkörperung in der Aufnahme spielfrei gehalten und demzufolge verliergesichert und positioniert ist.

Die Verformung kann partiell oder gegebenenfalls über die gesamte Erstreckung der Aufnahme erfolgen.

Die Erfindung eignet sich in besondere Weise für Führungsschienen, bei denen in bekannter Weise an einander gegenüberliegenden Seiten jeweils wenigstens eine Laufbahn zum Abwälzen von Wälzkörpern wie Kugeln oder auch Laufrollen versehen sind, wobei die Aufnahme zwischen diesen beiden Seiten angeordnet ist. Zwischen diesen beiden Seiten kann eine Schienenoberseite gelegen sein.

Es ist bekannt, dass die Schienenkörper der Führungsschienen oftmals aus Aluminium oder einer Aluminiumlegierung im Strangpressverfahren hergestellt werden. Die Erfindung nutzt den Ausgangswerkstoff und das Verfahren, um die Aufnahme bereits im Strangpressverfahren herzustellen, so dass die Wand ebenfalls in diesem Strangpressverfahren hergestellt werden kann. Auf diese wirtschaftlich einfache Art und Weise kann eine erfindungsgemäße Führungsschiene bereitgestellt werden, bei der in vorteilhafter Weise einerseits Arbeitsschritte vollständig entfallen, und bei der andererseits ein ohnehin vorgesehener Arbeitsschritt, nämlich das Strangpressen in vorteilhafter Weise genutzt werden.

Im Querschnitt durch die Führungsschiene gesehen kann die Aufnahme beliebige Formen annehmen, sie kann vorteilhaft rechteckförmig oder oval ausgeführt sein, wobei Eckbereiche dieser Aufnahme gerundet sein können.

Nachstehend wird die Erfindung anhand eines in insgesamt zwei Figuren abgebildeten Ausführungsbeispieles näher erläutert. Es zeigen:
- Figur 1: einen Querschnitt durch eine erfindungsgemäße Führungs- schiene für ein Linearwälzlager und
- Figur 2: die Führungsschiene aus Figur 1 im Querschnitt.

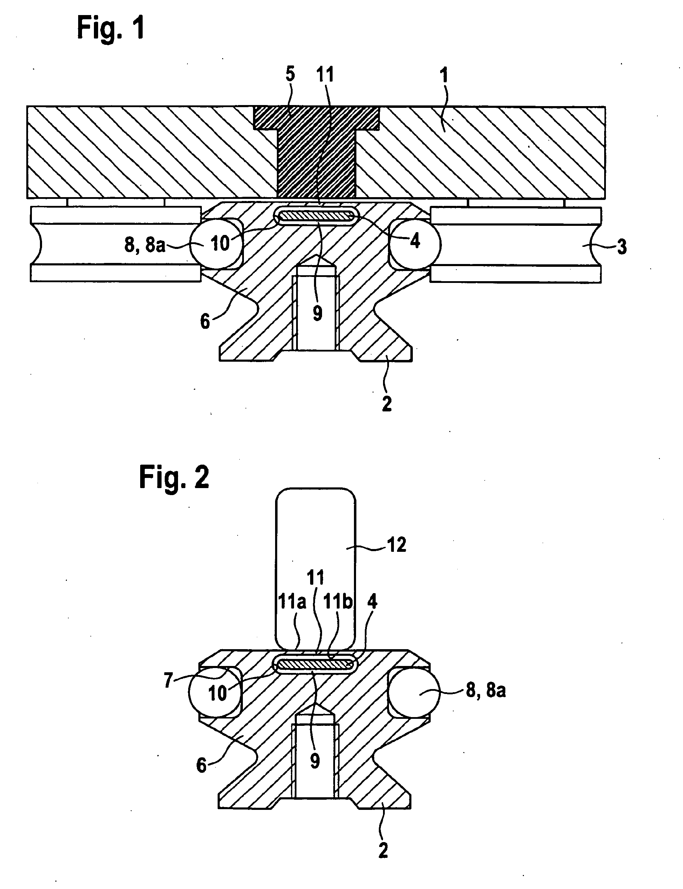

Figur 1 zeigt ein Linearwälzlager im Querschnitt. Ein Führungswagen 1 ist auf einer Führungsschiene 2 längsverschieblich über Laufrollen 3 gelagert. Der Führungswagen 2 ist an gegenüberliegenden Seiten jeweils mit einem Satz dieser Laufrollen 3 ausgerüstet, wobei die Führungsschiene 2 zwischen den beiden Sätzen von Laufrollen 3 angeordnet ist.

Die Führungsschiene 2 ist an ihrer Schienenoberseite mit einer Maßverkörperung 4 versehen. Der Führungswagen 1 ist mit einem hier nur angedeuteten Messkopf 5 versehen. Der Messkopf 5 ist an einer hier nicht weiter abgebildeten Auswerteeinheit angeschlossen. Auf diese Weise ist eine Längenmesseinrichtung gebildet, mit deren Hilfe die Position des Führungswagens 1 auf der Führungsschiene 2 jederzeit bestimmt werden kann.

Die als Maßband ausgeführte Maßverkörperung kann aus einem metallischen Werkstoff gefertigt sein, jedoch sind auch Kunststoffmaterialien denkbar. An diesem Maßband können Maßmarkierungen angebracht sein. Diese Maßmarkierungen können auf induktivem oder kapazitivem Weg oder mittels Magnetowiderständen oder Hall- Bauelementen oder nach dem Prinzip der Wirbelstromerzeugung gelesen werden. Beispielsweise kann an dem Maßband ein Magnetisierungsmuster mit abwechselnden magnetischen Nord- und Südpolen vorgesehen werden. Denkbar ist auch, dass Maßband mit einem Leiterdrahtmuster zu versehen. Wenn der Messkopf 5 zur Abtastung der Maßmarkierungen ein elektrisches oder ein magnetisches Feld abstrahlt und dieses Feld von dem Material des Maßbandes beeinflusst wird, können die Schwankungen der Permeabilität des Maßbandes von der Sensoranordnung erfasst werden, beispielsweise mittels einer Feldplatte oder eines Hall-Sensors. Der Messkopf 5 kann beispielsweise inkrementale Signale aufnehmen, vorausgesetzt, der Abstand zwischen der Maßverkörperung 4 und dem Messkopf 5 ist nicht zu groß.

Die Führungsschiene 2 weist einen Schienenkörper 6 auf, der aus Aluminium im Strangpressverfahren hergestellt ist. Der Schienenkörper 6 weist an seinen beiden Längsseiten jeweils eine Nut 7 auf, in die eine Welle 8 mit kreisrundem Querschnitt eingelegt ist. Die Mantelfläche der Welle 8 bildet eine Laufbahn 8a zum Abwälzen der Laufrollen 3. Die Wellen 8 sind vorzugsweise aus gehärtetem Stahl gebildet.

Die Maßverkörperung 4 ist in eine Aufnahme 9 eingesetzt, die von einer Wandung 10 des Schienenkörpers 6 umfangsseitig vollständig umschlossen ist, wobei die Wandung 10 umfangsseitig einstückig ausgeführt ist. Im vorliegenden Fall weist diese Wandung 10 umfangsseitig keine Unterbrechungen oder Öffnungen auf, so dass hier eine umfangsseitig geschlossene Aufnahme hergestellt und die Maßverkörperung 4 einwandfrei geschützt ist. Diese Wandung 10 wird mit der Herstellung des Schienenkörpers 6 im Strangpressverfahren bereitgestellt. Eine Wand 11 des Schienenkörpers 6 weist eine äußere Wandung 11a auf, die an der Schienenoberseite gelegen ist. Die Wand 11 begrenzt mit ihrer inneren Wandung 11b die Aufnahme 9, wobei die Wandung 11 b Teil der Wandung 10 ist.

Das Strangpressverfahren macht es möglich, die Wand 11 dünnwandig auszubilden, so dass sichergestellt ist, dass die eingelegte Maßverkörperung 4 möglichst dicht an dem Messkopf 5 angeordnet werden kann.

Nach dem Einführen der Maßverkörperung 4 kann die Führungsschiene 2 an ihrer Schienenoberseite mit einer Andruckrolle 12 überfahren werden, wobei der Anpressdruck der Andruckrolle 12 so eingestellt ist, dass die Wand 11 eine leichte plastische Verformung erfährt, so dass die Maßverkörperung 4 in der Aufnahme 9 festgesetzt ist.

In den Figuren 1 und 2 ist die Aufnahme 9 im Querschnitt durch die Führungsschiene 2 gesehen etwa rechteckförmig ausgeführt, wobei Eckbereiche gerundet sind.

Die Wand 11 der erfindungsgemäßen Führungsschiene kann - sofern dies für bestimmte Anwendungen sinnvoll erscheint - stellenweise Öffnungen aufweisen, so dass die Aufnahme 9 stellenweise zur Schienenoberseite hin geöffnet ist.

### Bezugszahlenliste

- 1: Führungswagen
- 2: Führungsschiene
- 3: Laufrolle
- 4: Maßverkörperung
- 5: Messkopf
- 6: Schienenkörper
- 7: Nut
- 8: Welle
- 8a: Laufbahn
- 9: Aufnahme
- 10: Wandung
- 11: Wand
- 11a: äußere Wandung
- 11b: innere Wandung
- 12: Andruckrolle

## Patentansprüche

1. Führungsschiene für ein Linearwälzlager, deren Schienenkörper (6) mit einer in Längsrichtung der Führungsschiene (2) gesehen sich erstreckenden Aufnahme (9) für eine Maßverkörperung (4) versehen ist, wobei die Aufnahme (9) umfangsseitig von einer einstückig ausgeführten Wandung (10) des Schienenkörpers (6) umschlossen ist, und wobei eine Wand (11) des Schienenkörpers (6) eine äußere Wandung (11a) und eine innere Wandung (11b) aufweist, wobei die äußere Wandung (11a) an der Schienenoberseite gelegen und die innere Wandung (11b) Teil der Wandung (10) ist, **dadurch gekennzeichnet, dass** nach Einsetzen der Maßverkörperung (4) in die Aufnahme (9) die Wand (11) derart bleibend verformt wird, dass die Maßverkörperung (4) in der Aufnahme (9) verliergesichert und positioniert ist.

2. Führungsschiene nach Anspruch 1, deren aus Aluminium oder einer Aluminiumlegierung hergestellter Schienenkörper (6) im Strangpressverfahren hergestellt ist, wobei die Aufnahme (9) und die Wand (11) in diesem Strangpressverfahren gebildet sind.

3. Führungsschiene nach Anspruch 1, bei der die Aufnahme (9) im Querschnitt durch die Führungsschiene (2) gesehen rechteckförmig oder oval ausgeführt ist.

4. Führungsschiene nach Anspruch 3, bei der Eckbereiche der Aufnahme im Querschnitt durch die Führungsschiene (2) gesehen gerundet sind.

5. Führungsschiene nach Anspruch 1, bei der die Wand (11) partiell oder über die gesamte Erstreckung der Aufnahme (9) verformt ist.

## Claims

1. Guide rail for a linear rolling bearing, the rail body (6) of which is provided with a receptacle (9), which extends in the longitudinal direction of the guide rail (2), for a solid measure (4), with the receptacle (9) being peripherally enclosed by a wall (10), which is formed in one piece, of the rail body (6), and with a wall (11) of the rail body (6) having an outer wall (11a) and an inner wall (11b), with the outer wall (11a) being situated on the rail upper side and with the inner wall (11b) being part of the wall (10), **characterized in that**, after the insertion of the solid measure (4) into the receptacle (9), the wall (11) is permanently deformed such that the solid measure (4) is captively secured and positioned in the receptacle (9).

2. Guide rail according to Claim 1, the rail body (6), which is produced from aluminium or an aluminium alloy, of which is produced by extrusion, with the receptacle (9) and the wall (11) being formed in said extrusion process.

3. Guide rail according to Claim 1, in which the receptacle (9) is of rectangular or oval shape as viewed in cross section through the guide rail (2).

4. Guide rail according to Claim 3, in which the corner regions of the receptacle are rounded as viewed in cross section through the guide rail (2).

5. Guide rail according to Claim 1, in which the wall (11) is deformed partially or over the entire extent of the receptacle (9).

## Revendications

1. Rail de guidage pour un palier à roulement linéaire, dont le corps de rail (6) est pourvu d'un logement (9) s'étendant dans la direction longitudinale du rail de guidage (2) pour une échelle de mesure (4), le logement (9) étant entouré sur sa périphérie par une paroi (10) du corps de rail (6) réalisée d'une seule pièce, et une paroi (11) du corps de rail (6) présentant une paroi extérieure (11a) et une paroi intérieure (11b), la paroi extérieure (11a) étant placée du côté supérieur du rail et la paroi intérieure (11b) faisant partie de la paroi (10), **caractérisé en ce que**, après l'insertion de l'échelle de mesure (4) dans le logement (9), la paroi (11) reste déformée de telle sorte que l'échelle de mesure (4) soit positionnée et fixée de manière imperdable dans le logement (9).

2. Rail de guidage selon la revendication 1 dont le corps de rail (6) fabriqué en aluminium ou en alliage d'aluminium est fabriqué par un procédé de filage, le logement (9) et la paroi (11) étant formés au cours de ce procédé de filage.

3. Rail de guidage selon la revendication 1 dans lequel le logement (9) est réalisé sous forme rectangulaire ou ovale, vu en coupe à travers le rail de guidage (2).

4. Rail de guidage selon la revendication 3 dans lequel des régions de coins du logement sont arrondies, vu en coupe à travers le rail de guidage (2).

5. Rail de guidage selon la revendication 1 dans lequel la paroi (11) est déformée partiellement ou sur toute l'étendue du logement (9).
